# EUROPEAN PATENT APPLICATION

(11) **EP 4 609 970 A1**
(43) Date of publication of application: **03.09.2025**
(21) Application number: 24160089.9
(22) Date of filing: 27.02.2024
(51) Int. Cl.: B22F 3/15, B22F 10/25, B22F 10/28, B22F 10/64, B23K 11/00, B33Y 10/00, B33Y 40/20, B33Y 70/00, C22C 1/04, C22C 21/06

(54) **ALUMINIUM-ALLOY STRUCTURES AND ADDITIVE MANUFACTURING PRODUCTION METHODS THEREOF**

(71) Applicant: Université catholique de Louvain, 1348 Louvain-la-Neuve (BE)
(72) Inventor: De Raedemacker, Sophie, Braine-l Alleud (BE); Gheysen, Julie, Prilly (CH); Simar, Aude, Louvain-Neuve (BE); Hannard, Florent, Woluwe-Saint-Lambert (BE); Pyka, Grzegorz, Leuven (BE); Nothomb, Nicolas, Louvain-la-Neuve (BE); van der Rest, Camille, Blanmont (BE)
(74) Representative: De Clercq & Partners

(57) **Abstract**

The present invention relates to an alloy comprising zirconium (Zr), magnesium (Mg), and aluminum (Al); and manufacturing methods using the same; wherein a structure of the alloy is configured such that only a portion of the alloy structure undergoes a transition from a solid state to a molten state. An aspect of the present invention relates to a method for additive manufacturing an alloy structure, comprising the steps of: preparing an additive manufacturing material from an alloy comprising zirconium (Zr), magnesium (Mg), and aluminum (Al); additive manufacturing of an alloy structure using the additive manufacturing material; and, subjecting the alloy structure to a heat-treatment at an elevated temperature and an elevated pressure. Other aspects of the present invention relate to the alloy structure, the alloy, the additive manufacturing material, and a system for additive manufacturing of the alloy structure.

## Description

### FIELD OF THE INVENTION

The present invention relates to an alloy comprising zirconium (Zr), magnesium (Mg), and aluminum (Al); and manufacturing methods using the same; wherein a structure of the alloy is configured such that only a portion of the alloy structure undergoes a transition from a solid state to a molten state.

### BACKGROUND OF THE INVENTION

In recent years, additive manufacturing technologies, including 3D printing, have revolutionized traditional manufacturing processes across various industries for producing parts with complicated shapes. Among the various applications of 3D printing, the fabrication of metallic components, particularly aluminum alloys, has the advantage of reducing the time required from design to production compared to traditional processing techniques such as casting, forging, welding, and extruding. Additive manufacturing has been used primarily for prototyping in the past but has recently found use in various industrial fields, such as aerospace, medical care, automobiles, machinery, and architecture.

Especially in transportation industries, aluminium alloys are attractive due to their excellent strength-to-weight ratio, which, among other advantages, may lead to significant fuel savings. However, one of the main issues of some high-strength aluminium alloy compositions is their hot cracking susceptibility and a relatively high porosity level in a manufactured part. Such defects are known to have a detrimental influence on fatigue life, resulting in less resilient materials. In addition, changing the alloy composition to circumvent the introduction of processing defects may provide a significant reduction in tensile properties. The aforementioned challenges mainly hinder the introduction of new additive manufactured alloys to the market, which requires high reliability.

In view of the above, there exists a need for improved aluminium alloys with good tensile properties, and compositions and methods for producing the same.

### SUMMARY OF THE INVENTION

It has now been found that some or all of the above challenges can be addressed, and objectives can be achieved, either individually or in any combination, by using a method for additive manufacturing of an alloy structure as defined herein. In particular, the method of the invention relies on the important step of subjecting an alloy structure to a heat-treatment, thereby obtaining a "heat-treated" alloy structure that is substantially free from defects. Moreover, the obtained alloy structure is characterized by good tensile properties, such as a yield strength of at least 300 MPa, which is necessary for the development of commercially relevant alloys.

In particular, the present inventors have advantageously found that an alloy structure 3D printed or 3D printable from an alloy comprising defined amounts of zirconium (Zr), magnesium (Mg), and aluminum (Al) may provide an alloy structure that can be partially melted to reduce or remove remaining defects after 3D printing. In other words, at a particular temperature a portion of the structure can transition from a solid state to a molten state, without losing structural integrity of the manufactured part (i.e., the 3D printed shape).

Another advantage of the present invention is that the 3D printed metal part may be "healed" repeatedly after manufacturing. In other words, the alloy structure as disclosed herein may recover from certain types of damage, substantially restoring the material's original strength and/or structural properties. Advantageously, the method of the present invention is characterized in that it is configured to manufacture 3D printed metal parts that may have a significantly reduced porosity, which for instance improves the resistance to fatigue loading (i.e., exposure to repeated load cycles).

Also advantageously, the method of the present invention may enable the fabrication of complex geometric shapes that may be challenging or impossible to produce using traditional manufacturing methods.

Accordingly, an aspect of the present invention relates to a method for additive manufacturing of an alloy structure. The method preferably comprises the steps of:
a) preparing an additive manufacturing material from an alloy comprising zirconium (Zr), magnesium (Mg), and aluminum (Al);
b) additive manufacturing of an alloy structure using the additive manufacturing material; and
c) subjecting the alloy structure to a heat-treatment at a temperature of at least 350 °C to at most 600 °C and/or a pressure of at least 10 MPa;
wherein the amount of zirconium (Zr) in the alloy is at least 0.5 wt.% and at most 5.0 wt.%; wherein the amount of magnesium (Mg) in the alloy is at least 6.0 wt.% and at most 20.0 wt.%; and wherein the amount of aluminum (Al) in the alloy is at least 75.0 wt.% and at most 93.5 wt.%; with wt.% based on the total weight of the alloy.

In particular embodiments, the amount of zirconium (Zr) in the alloy may be at least 1.0 wt.% and at most 3.0 wt.%, preferably 2.0 wt.%; wherein the amount of magnesium (Mg) in the alloy may be at least 9.0 wt.% and at most 15.0 wt.%, preferably 14.0 wt.%; and wherein the amount of aluminum (Al) in the alloy may be at least 82.0 wt.% and at most 90.0 wt.%, preferably 84.0 wt.%; with wt.% based on the total weight of the alloy.

In some particular embodiments, the alloy structure may be subjected to a heat-treatment for at least 1.0 minute to at most 6.0 hours, preferably 30.0 minutes.

In some particular embodiments, the heat-treatment may comprise hot isostatic pressing of the alloy structure.

In some particular embodiments, the heat-treatment may comprise annealing, aging and/or multiple aging. In some particular embodiments, the temperature of the heat-treatment may be at least 400 °C to at most 550 °C, preferably 520°C.

In some particular embodiments, the pressure of the heat-treatment may be at least 10 MPa to at most 400 MPa, preferably 300 MPa.

In some particular embodiments, the method as disclosed herein may further comprise sand blasting, vibratory finishing, and/or shot peening the alloy structure.

In some particular embodiments, the additive manufacturing of the alloy structure may comprise Laser-Powder Bed Fusion, Electron Beam Powder Bed Fusion, Directed Energy Deposition, Friction Stir Deposition, or Friction Stir Additive Manufacturing; and preferably Laser-Powder Bed Fusion wherein the laser power is at least 100 W to at most 400 W and the scanning speed is at least 100 mm/s to at most 7000 mm/s.

In some particular embodiments, the heat-treatment may comprise partially melting the alloy structure, preferably such that only a portion of at least 10.0 wt.% to at most 30.0 wt.% of the alloy structure undergoes a transition from a solid state to a molten state, with wt.% based on the total weight of the alloy structure.

Another aspect of the present invention relates to an alloy structure. The alloy structure is preferably obtainable or obtained by means of a method as disclosed herein, and preferably wherein the alloy structure is configured such that only a portion of at least 10.0 wt.% to at most 30.0 wt.% of the alloy structure undergoes a transition from a solid state to a molten state when heated to a temperature of at least 350 °C and at most 600 °C.

Another aspect of the present invention relates to an alloy structure obtainable or obtained by means of the method as disclosed herein, characterized in that the alloy structure is substantially free of defects after being subjected to a heat-treatment of at least 350 °C to at most 600°C, and a pressure of at least 10 MPa. In some particular embodiments, the alloy structure exhibits, after heat-treatment, a total volume of defects reduced by at least 80%, or at least 90%, preferably at least 98%, compared to the initial total volume of defects before the heat treatment.

In some particular embodiments, the alloy structure may have a layer thickness of at least 10.0 µm to at most 100.0 µm.

Another aspect of the present invention relates to an alloy. The alloy preferably comprises zirconium (Zr), magnesium (Mg), and aluminum (Al); wherein a structure of the alloy has a yield strength of at least 300 MPa, and said structure is configured such that after being subjected to a heat treatment of at least 350 °C to at most 600°C and a pressure of at least 10 MPa it is substantially free of defects; and wherein the amount of zirconium (Zr) in the alloy is at least 0.5 wt.% and at most 5.0 wt.%, preferably 2.0 wt.%; wherein the amount of magnesium (Mg) in the alloy is at least 6.0 wt.% and at most 20.0 wt.%, preferably 14.0 wt.%; and wherein the amount of aluminum (Al) in the alloy is at least 75.0 wt.% and at most 93.5 wt.%, preferably 84.0 wt.%; with wt.% based on the total weight of the alloy.

In some particular embodiments, the alloy may further comprise copper (Cu), iron (Fe), gallium (Ga), and titanium (Ti); and optionally zinc (Zn), scandium (Sc), boron (B), silicon (Si), and/or manganese (Mn).

In some particular embodiments, the combined amount of copper (Cu), iron (Fe), gallium (Ga), and titanium (Ti); and optionally zinc (Zn), scandium (Sc), boron (B), silicon (Si), and/or manganese (Mn) may be at most 5.0 wt.%, preferably 3.0 wt.%; with wt.% based on the total weight of the alloy.

In some particular embodiments, the weight ratio of zirconium (Zr) to magnesium (Mg) may range from 1:1 to 1:13.5, preferably 1:7.5.

Another aspect of the present invention relates to an additive manufacturing material. The additive manufacturing material preferably comprises an alloy comprising zirconium (Zr), magnesium (Mg), and aluminum (Al); and wherein a structure of the additive manufacturing material has a yield strength of at least 300 MPa, and said structure is configured such that after being subjected to a heat treatment of at least 350 °C to at most 600°C and a pressure of at least 10 MPa it is substantially free of defects; and wherein the amount of zirconium (Zr) in the powder is at least 0.5 wt.% and at most 5.0 wt.%, preferably 2.0 wt.%; wherein the amount of magnesium (Mg) in the powder is at least 6.0 wt.% and at most 20.0 wt.%, preferably 14.0 wt.%; and wherein the amount of aluminum (Al) in the powder is at least 75.0 wt.% and at most 93.5 wt.%, preferably 84.0 wt.%; with wt.% based on the total weight of the powder.

In some particular embodiments, the additive manufacturing material may be in the form of an additive manufacturing powder and/or an additive manufacturing filament, such as a wire, rod, strand or chips. Another aspect of the present invention relates to the use of an alloy as disclosed herein, or an additive manufacturing material as disclosed herein, to produce a healable alloy structure, preferably an alloy structure as disclosed herein.

The above and other characteristics, features and advantages of the present invention will become apparent from the following detailed description, which illustrate, by way of example, the principles of the invention.

### DETAILED DESCRIPTION OF THE FIGURES

The teaching of the application is illustrated by the following Figures which are to be considered as illustrative only and do not in any way limit the scope of the claims.
**FIG. 1** is a flowchart schematically illustrating an exemplary embodiment of the method, as disclosed herein, for additive manufacturing of an alloy structure (10).
**FIG. 2** is a SEM image of an "as-printed" alloy structure, according to an embodiment of the invention, showing Al₃Zr precipitates (white).
**FIG. 3** is a nano-CT tomograph image of an "as-printed" alloy structure, according to an embodiment of the invention, with a voxel size of 5 µm.
**FIG. 4** is a nano-CT tomograph image of a "heat-treated" alloy structure, according to an embodiment of the invention, with a voxel size of 5 µm.
**FIG. 5** is a nano-CT tomograph image of an "as-printed" comparative alloy structure with a voxel size of 35 nm.
**FIG. 6** is a nano-CT tomograph image of a comparative alloy structure, heated post-printing at 400 °C for 30 minutes, with a voxel size of 35 nm.
**FIG. 7** is a nano-CT tomograph image of an "as-printed" comparative alloy structure with a voxel size of 35 nm.
**FIG. 8** is a nano-CT tomograph image of a comparative alloy structure, heated post-printing at 540 °C for 30 minutes, with a voxel size of 35 nm.
**FIG. 9** is a nano-CT tomograph image of a comparative alloy structure, heated post-printing at 540 °C for 30 minutes and subsequently damaged, with a voxel size of 35 nm.
**FIG. 10** is a nano-CT tomograph image of a comparative alloy structure, heated post-printing at 540 °C for 30 minutes, damaged, and subsequently heated again at 540 °C for 30 minutes, with a voxel size of 35 nm.
**FIG. 11** is a tensile curve of a "heat-treated" alloy structure, according to an embodiment of the invention compared to an exemplary alloy structure of the state of the art.

### DETAILED DESCRIPTION OF THE INVENTION

When describing the invention, the terms used are to be construed in accordance with the following definitions, unless a context dictates otherwise.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, various aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while certain embodiments described herein include some but not other features included in other embodiments, combinations of features of different embodiments are meant to be within the scope of the invention, and form different embodiments, as would be understood by those in the art.

The terms "comprising", "comprises" and "comprised of" as used herein are synonymous with "including", "includes" or "containing", "contains", and are inclusive or open-ended and do not exclude additional, non-recited members, elements, or method steps. It will be appreciated that the terms "comprising", "comprises" and "comprised of" as used herein comprise the terms "consisting of", "consists" and "consists of".

As used in the specification and the appended claims, the singular forms "a", "an," and "the" include plural referents unless the context clearly dictates otherwise. By way of example, "a step" means one step or more than one step.

Unless defined otherwise, all technical and scientific terms used herein have the same meaning as is commonly understood by one of skill in the art.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of endpoints also includes the end point values themselves (e.g. from 1.0 to 5.0 includes both 1.0 and 5.0). Any numerical range recited herein is intended to include all sub-ranges subsumed therein.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "about" is used to provide flexibility to a numerical value or range endpoint by providing that a given value may be "a little above" or "a little below" said value or endpoint, depending on the specific context. Unless otherwise stated, use of the term "about" in accordance with a specific number or numerical range should also be understood to provide support for such numerical terms or range without the term "about". For example, the recitation of "about 30" should be construed as not only providing support for values a little above and a little below 30, but also for the actual numerical value of 30 as well.

The recitation of numerical ranges by endpoints includes all numbers and fractions subsumed within the respective ranges, as well as the recited endpoints. Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the disclosure described herein are capable of operation in other sequences than described or illustrated herein.

Reference in this specification may be made to devices, structures, systems, or methods that provide "improved" performance (e.g. increased or decreased results, depending on the context). It is to be understood that unless otherwise stated, such "improvement" is a measure of a benefit obtained based on a comparison to devices, structures, systems or methods in the prior art. Furthermore, it is to be understood that the degree of improved performance may vary between disclosed embodiments and that no equality or consistency in the amount, degree, or realization of improved performance is to be assumed as universally applicable.

The terms "wt.%," "vol%", or "mol%" refers to a weight percentage of a component, a volume percentage of a component, or molar percentage of a component, respectively, based on the total weight, the total volume of material, or total moles, which includes the component.

When describing the present invention, the terms used are to be construed in accordance with the following definitions, unless a context dictates otherwise.

In the following passages, different aspects or embodiments of the invention are defined in more detail. Each aspect or embodiment so defined may be combined with any other aspect(s) or embodiment(s) unless clearly indicated to the contrary. In particular, any feature indicated as being preferred or advantageous may be combined with any other feature or features indicated as being preferred or advantageous.

An aspect of the present invention relates to a method for additive manufacturing an alloy structure. The method preferably comprises the steps of:
a) preparing an additive manufacturing material from an alloy comprising zirconium (Zr), magnesium (Mg), and aluminum (Al);
b) additive manufacturing of an alloy structure using the additive manufacturing material; and
c) subjecting the alloy structure to a heat-treatment at an elevated temperature, preferably of at least 350 °C to at most 600 °C, and an elevated pressure, preferably of at least 10 MPa.

In preferred embodiments, the amount of zirconium (Zr) in the alloy is at least 0.5 wt.% and at most 10.0 wt.%, or at least 0.5 wt.% and at most 7.5 wt.%, preferably at least 0.5 wt.% and at most 5.0 wt.%, or at least 0.5 wt.% and at most 4.0 wt.%, or at least 1.0 wt.% and at most 4.0 wt.%, more preferably at least 1.5 wt.% and at most 3.0 wt.%; with wt.% based on the total weight of the alloy. An alloy comprising the amount of Zr defined herein has been found to provide an optimal balance in healability and improved strength of the alloy. In addition, by keeping the amount of zirconium sufficiently low, the production cost of the alloy may be optimized, thereby providing an improved and commercially relevant alloy structure. In preferred embodiments, the amount of magnesium (Mg) in the alloy is at least 1.0 wt.% and at most 30.0 wt.%, or at least 2.5 wt.% and at most 30.0 wt.%, or at least 5.0 wt.% and at most 30.0 wt.%, or at least 5.0 wt.% and at most 25.0 wt.%, preferably at least 6.0 wt.% and at most 20.0 wt.%, more preferably at least 10.0 wt.% and at most 20.0 wt.%, or at least 10.0 wt.% and at most 15.0 wt.%; with wt.% based on the total weight of the alloy. An alloy comprising the amount of Mg defined herein has been found to provide an alloy that may be partially melted at a temperature well below the melting temperature of the overall alloy. Hence, providing a material that can be healed without compromising structural integrity. In addition, it has been found that when the alloy comprises magnesium above 30.0 wt.%, the alloy structure may become more difficult to manufacture during additive manufacturing.

In preferred embodiments, the amount of aluminum (Al) in the alloy is at least 60.0 wt.% and at most 98.5 wt.%, or at least 65.0 wt.% and at most 98.0 wt.%, or at least 70.0 wt.% and at most 98.0 wt.%, or at least 75.0 wt.% and at most 98.0 wt.%, or at least 75.0 wt.% and at most 95.0 wt.%, preferably at least 75.0 wt.% and at most 93.5 wt.%, more preferably at least 77.0 wt.% and at most 93.5 wt.%, or at least 82.0 wt.% and at most 93.5 wt.%; with wt.% based on the total weight of the alloy.

In some embodiments, the alloy may comprise impurities that are unavoidably mixed in trace amounts during the alloy formation process.

The present method and (preferred) embodiments thereof have the advantage that it may provide an alloy structure that can be partially melted to reduce or remove remaining defects after additive manufacturing. The "partial melting" as used herein generally refers to a phase transition (i.e., a change in physical properties) in which a material undergoes a transformation from a solid to a liquid state only within specific regions or portions of its overall structure. Unlike complete melting (e.g. during additive manufacturing in step b)), where the entire material transitions to a liquid state, partial melting involves selective areas experiencing a change in phase. It has been found that this provides a 3D printed metal part that may be "healed" (i.e., recovering material properties following damage or deformation) repeatedly after manufacturing, without losing structural integrity.

In the following, particularities and properties of the method steps of the invention, the starting materials applied therein, and the resulting alloy structure will be discussed in more detail.

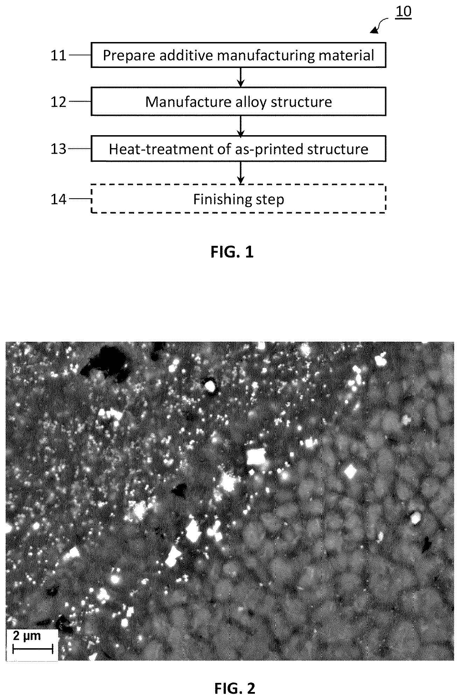

The present method will be discussed with reference to **FIG. 1****,** which shows a flow diagram of the method 10 for additive manufacturing of an alloy structure as described herein. It is understood that additional steps can be provided before, during, and after the steps of the method, and that some of the steps described can be replaced or eliminated for other implementations of the method. For example, although not shown, the method 10 may be preceded by one or more preprocessing steps commonly performed in the art to prepare an additive manufacturing material from an alloy.

In the shown embodiment, the method 10 begins at step 11 (step a)) by preparing an additive manufacturing material from an alloy comprising zirconium (Zr), magnesium (Mg), and aluminium (Al).

It should be noted that the term "alloy" as used herein may refer to a substantially homogeneous composition comprising a blend of three or more elements. Said composition may be used to produce an additive manufacturing material, which is suitable for the manufacturing of an alloy structure. It should be understood that the composition of the alloy and the alloy structure as described herein may be different. For instance, Mg may evaporate during the additive manufacturing process, which reduces the incorporated amount of Mg in the alloy structure.

An "additive manufacturing material" may refer to a substance suitable for use in additive manufacturing, encompassing but not limited to powders, wires, or other forms compatible with additive manufacturing techniques. In particular, said additive manufacturing material is configured for deposition, fusion, or solidification to construct three-dimensional objects, layer by layer, from a digital model.

In an exemplary embodiment, the method 10 may further comprise the steps of:
- providing an alloy comprising zirconium (Zr), magnesium (Mg), and aluminium (Al); and
- processing the alloy by means of melting and shaping, thereby obtaining an additive manufacturing material.

In particular embodiments, the alloy may be prepared by forming a molten metal mixture by means of e.g., an induction melting furnace or an electric resistance furnace having a vacuum pressure or an atmospheric pressure. Subsequently, an alloy powder or wire can be produced through, for instance, gas atomizing or extrusion after drawing. For example, and in some embodiments, an alloy powder may be prepared by forming a molten metal of the alloy raw material and then performing gas atomization on the molten metal. In some embodiments, the additive manufacturing material may comprise polymers, metals, ceramics, intermetallics, composites, or a combination thereof. Preferably, the additive manufacturing material comprises at least 5vol% and at most 20 vol%, or at least 10 vol% and at most 20 vol%, or at least 10 vol% and at most 15 vol% of polymers, metals, ceramics, intermetallics, composites, or a combination thereof; with vol% based on the total volume of the alloy.

In some embodiments, the additive manufacturing material may be a powder or a mixture of powders with an average particle size of between about 5.0 and about 200.0 µm, or between about 10.0 and about 200.0 µm, or between about 20.0 and about 200.0 µm, or between about 30.0 and about 200.0 µm, or between about 30.0 and about 100.0 µm. However, the average particle size is not limited hereto.

In some embodiments, the additive manufacturing material may be a wire with an average diameter of between about 0.1 and about 5.0 mm, or between about 0.2 and about 5.0 mm, or between about 0.3 and about 5.0 mm, or between about 0.5 and about 5.0 mm, or between about 0.5 and about 3.0 mm. However, the average diameter is not limited hereto.

The additive manufacturing material is suitable as a raw material for producing an (aluminium) alloy structure. The alloy or base metal mixture may be prepared by mixing or casting pure aluminium, pure magnesium, pure zirconium, magnesium- aluminium base alloy, and/or aluminium -zirconium base alloy, in a suitable composition ratio. Suitable non-limiting means of mixing include a powder blender. Suitable non-limiting examples of a casting means include an atomizer. The composition ratio of the alloy is determined by the desired composition ratio of the alloy structure obtained or obtainable by additive manufacturing. Hence, it should be clear that the composition of the alloy structure may vary from the composition of the alloy. The final composition of the alloy structure may be determined by using inductively coupled plasma optical emission spectroscopy. The skilled person understands how a desired composition ratio of the alloy structure can be obtained.

In particular embodiments, the homogeneity of the additive manufacturing material may be assessed by inductively coupled plasma optical emission spectroscopy (ICP-OES).

At step 12 of **FIG.1****,** the method 10 may include a step of manufacturing an alloy structure from the additive manufacturing material (step b)).

In the context of the present invention, the terms "additive manufacturing" or "3D printing" may generally refer to a manufacturing process that builds three-dimensional objects layer by layer. Additive manufacturing typically involves the successive deposition, curing, or bonding of material, which may be in the form of powders, filaments, or liquid resins, to create a physical object with a desired shape and structure.

In some embodiments, a desired alloy structure or part can be additively manufactured or 3D printed from an alloy powder, using a powder bed fusion (PBF) technique. In the powder bed fusion (PBF) technique, a desired product or part can be formed by thinly and uniformly spraying an alloy powder on a powder bed, melting the sprayed powder using a high energy beam, and cooling it. This process is repeated layer by layer to form a desired shape. As the high energy beam, for example, a laser beam or an electron beam may be used. Suitable powder bed fusion techniques may include direct metal laser sintering (DMLS), selective heat sintering (SHS), electron beam melting (EBM), selective laser melting (SLM) and/or selective laser sintering (SLS). Aside from the powder bed fusion, any other techniques that are widely used in additive manufacturing or 3D printing can be used.

In some embodiments, a desired product or part can be additively manufactured or 3D printed from an alloy wire, using one of the following techniques: direct energy deposition (DED), wire arc additive manufacturing (WAAM), etc. The product or part that can be additively manufactured or 3D printed from the aluminium alloy according to one embodiment of the present invention may be, for example, a product or part of an aircraft, automobile, machine, or medical device, but is not limited thereto.

In some preferred embodiments, the additive manufacturing of the alloy structure comprises Laser-Powder Bed Fusion (LPBF), Electron Beam Powder Bed Fusion (EBPBF), Directed Energy Deposition (DED), Friction Stir Deposition (FSD), or Friction Stir Additive Manufacturing (FSAM).

In some preferred embodiments, the additive manufacturing of the alloy structure comprises Friction Stir Deposition (FSD), preferably wherein the applied force is at least 3 kN to at most 20 kN, the rotational speed is at least 300 rpm to at most 1500 rpm, and the advancing speed is at least 50 mm/min to at most 500 mm/min.

In some preferred embodiments, the additive manufacturing of the alloy structure comprises Laser-Powder Bed Fusion (LPBF), preferably wherein the laser power is at least 100 W to at most 400 W and the scanning speed is at least 100 mm/s to at most 7000 mm/s.

In an exemplary embodiment, additive manufacturing of the alloy structure may comprise the following steps:
(i) providing a layer of an alloy powder or an additive manufacturing material as defined herein;
(ii) subject the layer to a laser beam, thereby selectively melting or sintering the alloy powder or additive manufacturing material;
(iii) solidify the melted or sintered alloy powder or additive manufacturing material, thereby forming a layer of the alloy structure.

In some embodiments, the additive manufacturing of the alloy may be performed under inert atmosphere, such as under an argon or nitrogen atmosphere. Preferably, the additive manufacturing of the alloy is performed in an atmosphere with a content of oxygen below 1000 ppm, or below 750 ppm, or below 500 ppm.

In some embodiments, the additive manufacturing of the alloy may be performed with a hatching space of up to 200.0 µm, or up to 175.0 µm, or up to 150.0 µm, or up to 125.0 µm, or up to 100.0 µm, or up to 75.0 µm, or up to 50.0 µm, or up to 25.0 µm. The term "hatching space" as used herein refers to the gap or spacing between adjacent passes or layers of the additive manufacturing material during the additive manufacturing process. Advantageously, the herein described method allows to control the hatching space, which provides an optimal balance between manufacturing speed and resolution.

In some particular embodiments, the method as disclosed herein may provide an alloy structure with a layer thickness of at least 10.0 µm to at most 100.0 µm, or at least 10.0 µm to at most 90.0 µm, or at least 10.0 µm to at most 80.0 µm, or at least 10.0 µm to at most 70.0 µm, preferably at least 10.0 µm to at most 50.0 µm.

In some embodiments, the additive manufacturing of the alloy is characterized by a printing time of at least 10 min/cm³, or least 15 min/cm³, or least 20 min/cm³, or least 25 min/cm³, or least 30 min/cm³, or least 35 min/cm³.

In some embodiments, the additive manufacturing of the alloy may reach a temperature of at least 650 °C to at most 1500 °C, or at least 700 °C to at most 1500 °C, or at least 750 °C to at most 1500 °C.

It should be understood that the "as-printed" alloy structure obtained after additive manufacturing may contain a variety of defects, including voids, cavities and/or cracks. Especially with larger particles of elemental metal material, the packing of the layer may be reduced.

At step 13 of **FIG.1****,** the method 10 may further involve subjecting the (as-printed) alloy structure to a heat-treatment at a temperature of at least 350 °C to at most 600 °C and a pressure of at least 10 MPa, thereby obtaining a "heat-treated" alloy structure that is preferably substantially free from defects (step c)).

An alloy structure that is "substantially free from defects," as used herein, refers to an additively manufactured metal part wherein the structural integrity and material quality exhibit a high standard. The term may denote an absence or minimal presence of significant defects, including but not limited to cracks, voids, cavities, porosities, and other irregularities. This term may further denote an absence or minimal presence of imperfections, such as irregularities or deviations from the intended design. Minimal presence indicates that the imperfections and/or defects are maintained within acceptable limits, ensuring that they do not compromise the intended functionality or performance of the additively manufactured metal part, including the mechanical, thermal, or other properties of the metal part. Fort instance, substantially free from defects may indicate that the total defect volume of the (heat-treated) alloy structure comprises at most 10.0%, or at most 7.5%, or at most 5.0%, or at most 2.5%, or at most 1.0%, or at most 0.5% of the total volume, preferably as measured by Multi-scale X-ray nano-holo-tomography.

The efficiency of reducing or removing defects of the (as-printed) alloy structure after heat-treatment as disclosed herein may be determined by any means suitable for detecting (internal) defects of an alloy structure known in the state of the art. For instance, non-limiting examples of suitable imaging methods include microscopy and tomography. The selected resolution of the imaging technique should mainly depend on the size of the defects. Resolution may typically range between 5 nm and 10 µm.

In some embodiments, tomography, and in particular Multi-scale X-ray nano-holo-tomography, may be used to determine the number and size of defects in the as-printed alloy structure and/or the heated-treated alloy structure. Multi-scale X-ray nano-holo-tomography generally provides three-dimensional images of samples at both nanoscale and microscale levels. Typically, a material or object of interest is exposed to an X-ray beam and a detector subsequently records an interference pattern created by the interaction of X-rays with the sample, producing holographic images. These images encode both amplitude and phase information of the X-ray wavefront passing through the sample. Multiple holographic images may be acquired as the sample is rotated, allowing for tomographic reconstruction. The impact of heat treating an alloy structure as described herein can then be assessed when comparing the total volume of defects of an as-printed alloy structure with the total volume of defects of a heat-treated alloy structure. In some embodiments, the heat-treated alloy structure may be characterized by a reduction in total defect volume of at least 80 %, or at least 85 %, or at least 90 %, or at least 95 %, preferably at least 98% with respect to the total defect volume of the as-printed alloy structure, preferably as measured by Multi-scale X-ray nano-holo-tomography. Advantageously, reduction of the total defect volume after heat-treatment may be associated with the healing of substantially all (internal) defects with a void diameter of up to 5.0 µm, preferably up to 10.0 µm. The term "internal defects" is used herein to denote defects that reside in the bulk of the alloy structure and therefore does not include surface irregularities. Determining a reduction in total defect volume from Multi-scale X-ray nano-holo-tomography image(s) may further comprise the steps of filtering, thresholding and water shedding said image(s). Based on the above, it should be understood that the skilled person can correctly determine the total defect volume of an alloy structure.

In some preferred embodiments, the heat-treatment comprises hot isostatic pressing of the alloy structure. "Hot isostatic pressing" (HIP) as used herein refers to a post-printing step that may be used to reduce the porosity of the (as-printed) alloy structure. Typically, HIP involves subjecting a component to both elevated temperature and isostatic gas pressure in a high pressure containment vessel. A Non-limiting example of a pressurising gas includes argon.

In particular embodiments, the heat-treatment comprises partially melting the alloy structure such that only a portion of at least 10.0 wt.% to at most 30.0 wt.% of the alloy structure undergoes a transition from a solid state to a molten state, with wt.% based on the total weight of the alloy structure. Without wishing to be bound by theory it was found that the herein disclosed heat treatment provides that the molten or liquid fraction is able to infiltrate into the voids and cracks of the as-printed alloy structure. This is in contrast to state of the art additive manufacturing of metal parts where significant porosity may remain.

The aforementioned can lead to shrinkage and a decreased fatigue resistance, which may require a separate infiltration procedure by adding additional binders (i.e., involving chemical binding of the layers) and/or additive manufacturing material. In the present invention, the heat-treatment provides for a simpler and more reliable manufacturing process to address shrinking and fatigue issues in the alloy structure without compromising the high resolution of the additive manufacturing technique.

In some embodiments, the heat-treatment comprises partially melting the alloy structure such that only a portion of at least 10.0 wt.% to at most 25.0 wt.%, or at least 10.0 wt.% to at most 22.5 wt.%, or at least 10.0 wt.% to at most 20.0 wt.%, at least 12.5 wt.% to at most 20.0 wt.%, at least 15.0 wt.% to at most 20.0 wt.%, of the alloy structure undergoes a transition from a solid state to a molten state. This has the advantage that a sufficient portion of the alloy structure is (re)meltable to provide an optimized balance between healing efficiency and retention of structural integrity of the 3D printed part.

In some preferred embodiments, the (as-printed) alloy structure may be subjected to a heat-treatment for at least 1.0 minute to at most 10.0 hours, or at least 1.0 minute to at most 9.0 hours, or at least 1.0 minute to at most 8.0 hours, or at least at least 1.0 minute to at most 7.0 hours, or at least 1.0 minute to at most 6.0 hours, or at least 5.0 minutes to at most 6.0 hours, or at least 10.0 minutes to at most 6.0 hours, or at least 30.0 minutes to at most 6.0 hours, or at least 30.0 minutes to at most 5.0 hours, or at least 30.0 minutes to at most 4.0 hours, or at least 30.0 minutes to at most 3.0 hours, preferably about 30.0 minutes. This has the advantage that the herein disclosed method provides a relatively fast heat-treatment to reduce or remove defects, which is in contrast to cumbersome annealing and aging steps disclosed in the art.

The heat-treatment step may be carried out at a temperature suitable for the composition of the alloy structure being used. In particular, the present invention provides that the heat-treatment step is carried out at a temperature towards, but not exceeding, the melting point of the 3D printed metal part. In some preferred embodiments, the temperature of the heat-treatment is at least 350 °C to at most 600 °C, or at least 420 °C to at most 550 °C, or at least 440 °C to at most 550 °C, or at least 460 °C to at most 550 °C, or at least 480 °C to at most 550 °C, or at least 500 °C to at most 550 °C, preferably 520 °C. The herein disclosed temperature range provides an optimized balance between removal of defects at a sufficient rate and maintaining structural integrity. In particular, it was found that a heat-treatment at too high temperatures resulted in complete melting (i.e., loss of the 3D shape) of the alloy structure.

In some preferred embodiments, the pressure of the heat-treatment is at least 10 MPa to at most 400 MPa, or at least 20 MPa to at most 400 MPa, or at least 30 MPa to at most 400 MPa, or at least 40 MPa to at most 400 MPa, or at least 50 MPa to at most 400 MPa, or at least 75 MPa to at most 400 MPa, or at least 100 MPa to at most 400 MPa, or at least 200 MPa to at most 400 MPa, preferably around 300 MPa. The herein disclosed pressure range ensures complete removal of defects, which is in contrast to annealing steps disclosed in the prior art that merely flatten the pores that may disadvantageously result in the formation of cracks.

In some preferred embodiments, the heat-treatment comprises annealing, aging and/or multiple aging. In other words, the heat-treatment as referred to herein may involve heating the (as-printed) alloy structure to a defined temperature and holding the alloy structure at that temperature under a defined pressure for a predetermined duration, optionally followed by controlled cooling.

At step 14 of **FIG.1****,** the method 10 may further comprise the step of subjecting the (heat-treated) alloy structure to a finishing process to improve the surface quality, appearance, and in some cases, the performance of the alloy structure for a desired application.

Accordingly, and in some preferred embodiments, the method as disclosed herein further comprises sand blasting, vibratory finishing, and/or shot peening the (heat-treated) alloy structure.

Sand blasting of the (heat-treated) alloy structure may comprise contacting the alloy structure with one or more abrasive material, typically using compressed air. This has the advantage that the surface may be cleaned, roughened and/or textured.

Vibratory finishing of the (heat-treated) alloy structure may comprise contacting the alloy structure with one or more abrasive material, typically using vibration in a closed vessel or device. This has the advantage that the surface may be cleaned, deburred and/or brightened.

Shot peening of the (heat-treated) alloy structure may comprise contacting the alloy structure with one or more pellet or shot particle, typically by propelling said one or more pellet or shot particle at high velocity onto the surface of the alloy structure. This has the advantage that the fatigue resistance of the alloy structure may be improved.

Below a non-limiting exemplary embodiment of the method as disclosed herein is described. The exemplary embodiment of the method starts by preparing a powder or filament from a(n) (base) alloy or base metal mixture with a composition as described in any one of the embodiments of the present invention as such or in combination (i.e., step a)). In a next step, an alloy structure is manufactured through layer-by-layer deposition of the powder or filament by means of a powder bed fusion (PBF) technique. Subsequently, in a further step, the as-printed alloy structure is subjected to a post-printing heat-treatment at a temperature of at least 350 °C to at most 600 °C and a pressure of at least 10 MPa. Optionally, the obtained heat-treated alloy structure may further be subjected to sand blasting and/or vibratory finishing to polish the metal part.

Another aspect of the present invention relates to an alloy. The alloy preferably comprises zirconium (Zr), magnesium (Mg), and aluminum (Al); wherein a structure of the alloy has a yield strength of at least 300 MPa, and said structure is configured such that after being subjected to a heat treatment of at least 350 °C to at most 600°C and a pressure of at least 10 MPa it is substantially free of defects; and wherein the amount of zirconium (Zr) in the alloy is at least 0.5 wt.% and at most 5.0 wt.%, preferably 2.0 wt.%; wherein the amount of magnesium (Mg) in the alloy is at least 6.0 wt.% and at most 20.0 wt.%, preferably 14.0 wt.%; and wherein the amount of aluminum (Al) in the alloy is at least 75.0 wt.% and at most 93.5 wt.%, preferably 84.0 wt.%; with wt.% based on the total weight of the alloy.

In preferred embodiments, the alloy may be used to form an additive manufacturing material as described herein. In particular, the alloy may be specifically designed in order to accommodate the rapid melting, solidification, and/or cooling cycles experienced during additive manufacturing. For example, the alloying elements and concentrations thereof may be configured such that intermetallics may be formed with other alloying elements during rapid cooling. Further, the alloying elements and concentrations thereof may be configured based on the meltability of a portion of a structure of the alloy.

The alloy according to one embodiment of the present invention may include Al₃Mg₂ phase. Al₃Mg₂ phase can serve as a reinforcing phase to improve the strength of the alloy. In the alloy, the Al₃Mg₂ phase may account for about 5% to 40% by volume. Specifically, the Al₃Mg₂ phase may be contained in an amount of about 5% to about 35% by volume, or about 5% to about 30% by volume, or about 7.5% to about 30% by volume, or about 10% to about 30%.

The alloy according to one embodiment of the present invention may include Al₃Zr phase. Al₃Zr phase can serve as a reinforcing phase to improve the strength of the alloy. In the alloy, the Al₃Zr phase may account for about 0.1% to 10% by volume. Specifically, the Al₃Zr phase may be contained in an amount of about 0.1% to about 7.5% by volume, or about 0.5% to about 7.5% by volume, or about 1.0% to about 7.5% by volume, or about 1.0% to about 5.0% by volume.

In some particular embodiments, the weight ratio of zirconium (Zr) to magnesium (Mg) may range from 1:1 to 1:13.5, or from 1:1 to 1:10, preferably 1:7.5.

In some particular embodiments, the alloy may further comprise copper (Cu), iron (Fe), gallium (Ga), and titanium (Ti); and optionally zinc (Zn), scandium (Sc), silicon (Si), and/or manganese (Mn).

In some particular embodiments, the combined amount of copper (Cu), iron (Fe), gallium (Ga), and titanium (Ti); and optionally zinc (Zn), scandium (Sc), silicon (Si), and/or manganese (Mn) may be at most 5.0 wt.%, preferably 3.0 wt.%; with wt.% based on the total weight of the alloy.

Another aspect of the present invention relates to an additive manufacturing material. The additive manufacturing material preferably comprises an alloy comprising zirconium (Zr), magnesium (Mg), and aluminum (Al); and wherein a structure of the additive manufacturing material has a yield strength of at least 300 MPa, and said structure is configured such that after being subjected to a heat treatment of at least 350 °C to at most 600°C and a pressure of at least 10 MPa it is substantially free of defects; and wherein the amount of zirconium (Zr) in the powder is at least 0.5 wt.% and at most 5.0 wt.%, preferably 2.0 wt.%; wherein the amount of magnesium (Mg) in the powder is at least 6.0 wt.% and at most 20.0 wt.%, preferably 14.0 wt.%; and wherein the amount of aluminum (Al) in the powder is at least 75.0 wt.% and at most 93.5 wt.%, preferably 84.0 wt.%; with wt.% based on the total weight of the powder.

In some particular embodiments, the additive manufacturing material may be in the form of an additive manufacturing powder, an additive manufacturing powder mixture, and/or an additive manufacturing filament, such as a wire, rod or strand.

Another aspect of the present invention relates to an alloy structure. The alloy structure is preferably obtainable or obtained by means of a method as disclosed herein. Preferably, the alloy structure is configured such that only a portion of at least 10.0 wt.% to at most 30.0 wt.% of the alloy structure undergoes a transition from a solid state to a molten state when heated to a temperature of at least 350 °C and at most 600 °C.

As described above, partial melting of the alloy structure results in the formation of a molten or liquid fraction. The molten or liquid fraction may be determined by differential scanning calorimetry (DSC) at a heating and cooling rate of 10 °C min⁻¹ under constant nitrogen flow.

Another aspect of the present invention relates to an alloy structure obtainable or obtained by means of the method as disclosed herein, characterized in that the alloy structure is substantially free of defects after being subjected to a heat treatment of at least 350 °C to at most 600°C and a pressure of at least 10 MPa. As described above, an alloy structure as obtained herein may advantageously provide a healable alloy structure, without compromising structural integrity, and characterized by good tensile properties. It has been found that (partial) melting of the alloy structure, as such, is insufficient to remove (larger-sized) defects. In particular, experimentation has revealed that an additional pressure is required to remove voids, cracks, and porosities present in an "as-printed" alloy structure.

The alloy structure as disclosed herein, preferably obtainable or obtained by means of a method as disclosed herein, may be characterized by a high strength, ductility, fracture toughness, fatigue strength, percent elongation, corrosion resistance, and/or elevated temperature strength and/or any combination thereof and, therefore, result in satisfactory products.

The strength of the alloy structure may exceed that of some existing (aluminium) alloy structures. The amount of force required to break a material is often referred to as the "tensile strength" or "ultimate tensile strength" of the material, while the amount of force required to permanently bend or deform a material may be referred to as the "yield strength" of the material. In preferred embodiments, the (heat-treated) alloy structure may have an average yield strength of at least 300 MPa, or at least 325 MPa, or at least 350 MPa, or at least 360 MPa.

In preferred embodiments, the (heat-treated) alloy structure exhibits, after heat-treatment, a total volume of defects reduced by at least 80%, or at least 90%, preferably at least 98%, compared to the initial total volume of defects before the heat treatment. Therefore, and in some embodiments, the heat-treated alloy structure has a lower total volume of defects compared to the total volume of defects of an as-printed alloy structure. For instance, the total volume of defects of the heat-treated alloy structure may be about 5 times lower, or 6 times lower, or 7 times lower, or 8 times lower, or 9 times lower, or 10 times lower, or 20 times lower, or 30 times lower, or 40 times lower, or 50 times lower, or 100 times lower.

Another aspect of the present invention relates to the use of an alloy as disclosed herein, or an additive manufacturing material as disclosed herein, to produce a healable alloy structure, preferably an alloy structure as disclosed herein.

Another aspect of the present invention relates to a system for additive manufacturing of an alloy structure.

Preferably, the system comprises
- a material preparation means configured for preparing an additive manufacturing material from an alloy comprising zirconium (Zr), magnesium (Mg), and aluminum (Al);
wherein the alloy comprises at least 0.5 wt.% and at most 5.0 wt.% of zirconium (Zr), at least 6.0 wt.% and at most 20.0 wt.% of magnesium (Mg), and at least 75.0 wt.% and at most 93.5 wt.% of aluminum (Al); with wt.% based on the total weight of the alloy.
- an additive manufacturing means configured for additive manufacturing of an alloy structure using the additive manufacturing material;
- heat-treatment means configured for subjecting the alloy structure to a heat-treatment at an elevated temperature, preferably of at least 350 °C to at most 600 °C, and an elevated pressure, preferably of at least 10 MPa.

In some embodiments, the material preparation means comprises a powder blender and/or an atomizer. In some embodiments, the additive manufacturing means comprises a system configured for 3D printing, more specficially, a 3D printer. For instance, the 3D printer can be configured for Laser-Powder Bed Fusion (LPBF), Electron Beam Powder Bed Fusion (EBPBF), Directed Energy Deposition (DED), Friction Stir Deposition (FSD), and/or Friction Stir Additive Manufacturing (FSAM).

In some embodiments, the heat-treatment means comprises a hot isostatic press.

The invention is illustrated but not limited by the following examples.

### EXAMPLES

### METHODOLOGY

The following describes the materials and methods used for all examples unless otherwise stated. Inductively coupled plasma optical emission spectroscopy was performed on a ICP-OES 5100 machine of Agilent Technologies. A typical procedure involved 2 types of chemical attacks one with 3 acids (HCl, HNO₃, and HF) and a sodium oxidizing fusion. The machine was used in axial detection mode.

Laser diffraction granulometry was performed on a Microtrac Series 5000 SYNC particle Size & Shape analysis system (SYNC particle analyzer). A typical procedure involved the use of demineralized water as a solvent. The machine used both a camera and X-ray diffraction to determine the size of particles. The camera was used for the detection of particles with a diameter of 100µm or more and the X-ray diffraction technique was used for particles smaller than 100µm.

The manufacturing of the samples was performed by Laser Powder Bed Fusion (LPBF) on a ProX200 LPBF machine from 3D Systems. It was composed of a laser with a wavelength of 1070 nm and a maximum power of 273 W. The build plate of the LPBF machine cannot be heated and the fabrication volume is 140 x 140 x 125 mm. All the samples were built under argon inert atmosphere and the oxygen content was kept below 500 ppm.

The observation of microstructural analysis was performed by scanning electron microscopy (SEM Zeiss FEGSEM ultra-55) on a polished to mirror-like surface (0.04 µm). A typical procedure involved the use of the following parameters electron high tension (EHT) of 15 kV, magnification of 5000, a working distance of 3.5 mm, an aperture size of 60 µm. The backscattered electron signal was used to determine the microstructure of the sample.

Differential scanning calorimetry (DSC) equipment was used to investigate the amount of liquid phase during the healing. It was performed on a STA 449 F3 Jupiter machine to observe the melting peaks. An empty graphite crucible was used as the reference and the sample was introduced in another graphite crucible. Both crucibles were closed with a graphite lid. The heating procedure was set to a heating rate of 10 °C/min up to 660 °C and then cooled down to room temperature at 10 °C/min.

X-ray nano-holo-tomography (nano-CT) was performed on beamline ID16B at the ESRF synchrotron (Grenoble, France). Tensile specimens were pulled until fracture and nano-CT samples were extracted close to the fracture surface in order to maximise the damage content in the sample before healing. The samples were mounted on an alumina tube using cement glue (to resist high temperatures) and this alumina tube was fixed on a brass holder in order to be fit on the beamline and in the furnace. The beamline is equipped on a dedicated furnace. It is therefore possible to apply a heat treatment in between scans without moving the sample. The damaged samples were scanned before and after healing heat treatment (30 min at various temperatures followed by a cooling rate of 10 °C/min until 400°C) in order to follow the damage healing evolution. One scan acquires 3203 projections over the 360° revolution of the sample, with an exposure time of 45 ms per step. A conic pink beam (ΔE/E=10-2) with an energy of 29.6 keV was used. Two scans were performed for each sample: a full sample scan at a voxel size of 241 nm and a region of interest (ROI) scan at a voxel size of 35 nm. The ROI is a cylinder of 75 µm diameter and 90 µm height.

After the nano-CT experiment, plasma focused ion beam scanning electron microscope (PFIB-SEM) and electron dispersive x-ray spectroscopy (EDX) were performed to investigate the healing mechanism on the exact same ROI analysed previously by nano-CT. First, the sample was glued on a specific ThermoFisher sample holder, containing the fiducial markers for multimodal data registration, and a whole volume of a sample has been scanned with voxel size of 2 µm using µCT lab-based system (Nanotom, Germany). µCT based data were co-registered with the holder surface SEM images in order to define the specific ROI coordinates within µCT images and to be traced further with PFIB-SEM. After precise determination of the ROI, a serial sectioning tomography using the automated Xe PFIB (Helios Hydra DualBeam) combined with the acquisition of SEM images was launched. The correlative analysis was then performed using the software Avizo 3D 2021.1.

The static mechanical properties were studied according to ASTM-E8M - 15 using a Zwick/Roell 50 kN tensile machine. The specimens were machined by electrical discharge machining to get a thickness of 1.5 mm, reduced section length and width are 26 and 6 mm respectively. They were then prepared for mechanical testing by polishing the surface up to 1200 grit sandpaper by hand. The extension rate of the test was 1 mm/min and samples were loaded until fracture. Three samples were tested for each condition and their results were averaged.

### EXAMPLES

### Example 1

In a first experiment, an aluminium alloy was prepared by mixing 83.7 wt.% of pure aluminium (purity > 99.7 %), 13.9 wt.% of pure magnesium (purity > 99.8 %), and 1.9 wt.% of pure zirconium in a Turbula powder blender for at least three hours to obtain a additive manufacturing material in the form of a powder. The homogeneity of the additive manufacturing powder was assessed by Inductively coupled plasma optical emission spectroscopy on three different mixture samples of the additive manufacturing powder. The obtained chemical composition of the aluminium alloy was Al (83.7 wt.% ± 0.2), Mg (13.9 wt.% ± 0.2), Zr (1.9 wt.% ± 0.1), Cu (0.02 wt.% ± 0.01), Fe (0.11 wt.% ± 0.01), Ga (0.01 wt.% ± 0.01), and Ti (0.01 wt.% ± 0.01).

Scanning Electron Microscopy (SEM) was used to determine the formation of Al₃Zr phases. Figure 2 is a SEM image of the as-printed alloy structure showing Al₃Zr precipitates (white). The remainder of the alloy network surrounds the Al dendrites (dark gray).

Additive manufacturing of the alloy structure was performed by Laser Powder Bed Fusion (LPBF) on a ProX200 LPBF machine from 3D Systems as described above in the methodology section using the following LPBF parameters a laser power P of 246 W, a scanning speed v of 600 mm/s, a hatching 140 space HS of 100 µm and a layer thickness t of 30 µm. The resulting chemical composition of the as-printed alloy structure was Al (89.7 wt.% ± 0.7), Mg (7.4 wt.% ± 0.9), Zr (2.2 wt.% ± 0.2), Cu (0.02 wt.% ± 0.01), Fe (0.11 wt.% ± 0.01), Ga (0.01 wt.% ± 0.01), and Ti (0.01 wt.% ± 0.01).

Subsequently, the as-printed alloy structure was heat-treated by using hot isostatic pressing (HIP) at a temperature of 540 °C for 30 minutes and an argon isostatic pressure of 300 MPa. The reduction and/or removal of defects after heat-treatment of the alloy structure is summarized in **Table 1.** From Table 1 it follows that the total defect volume could be reduced with about 98.76%, moreover the total number of voids could be reduced about 55-fold.

**Table 1: Analysis of voids before and after heat-treatment of the alloy structure.**

| Experiment | Total defect volume (mm³) | Total number of voids |
|---|---|---|
| As-printed | 4.82 | 9032 |
| Heat-treated | 0.06 | 160 |

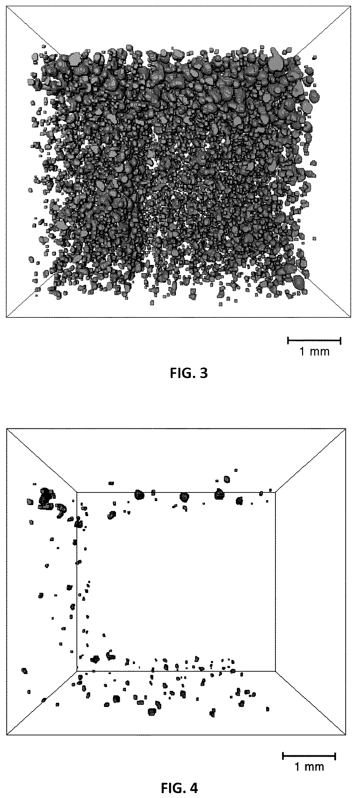

**Figure 3** is a nano-CT tomograph image of the as-printed alloy structure with a voxel size of 5 µm, clearly showing a high number of defects.

**Figure 4** is a nano-CT tomograph image of the heat-treated alloy structure with a voxel size of 5 µm, clearly showing that all the inside porosities disappeared during the HIP treatment, and/or are at least smaller than the detection size (around 15 µm). The remaining porosities are located on the edges of the sample and are open.

### Comparative Example 1

An additive manufactured alloy structure was prepared according to the method of Example 1. The chemical composition of the as-printed alloy structure was Al (89.7wt.% ± 0.7), Mg (7.4 wt.% ± 0.9), Zr (2.2 wt.% ± 0.2), Cu (0.02 wt.% ± 0.01), Fe (0.11 wt.% ± 0.01), Ga (0.01 wt.% ± 0.01), and Ti (0.01 wt.% ± 0.01). Additive manufacturing of the alloy structure was performed by using the following LPBF parameters a laser power P of 191 W, a scanning speed v of 300 mm/s, a hatching 140 space HS of 60 µm and a layer thickness t of 30 µm. Subsequently, the as-printed alloy structure was transferred to a furnace, operating at 400 °C, for 30 minutes. For the chemical composition above, the chosen temperature was below the melting point of any fraction or portion of the alloy structure. As a result, the voids or defects present in the as-printed alloy structure could only be infiltrated by diffusion of a portion or fraction of said alloy structure. The reduction and/or removal of defects after heating the alloy structure is summarized in **Table 2.** From Table 2 it follows that the total defect volume could be reduced with about 27.50%, moreover the total number of voids could be reduced about 8-fold.

**Table 2: Analysis of voids before and after heating of the alloy structure.**

| Experiment | Total defect volume (µm³) | Total number of voids |
|---|---|---|
| As-printed | 440 | 676 |
| Heat-treated | 319 | 84 |

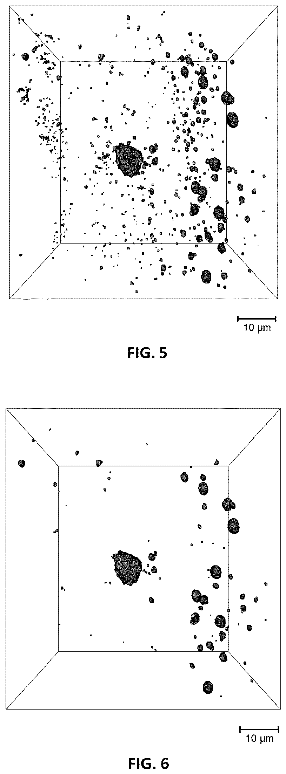

**Figure 5** is a nano-CT tomograph image of the as-printed alloy structure with a voxel size of 35 nm, clearly showing a high number of defects.

**Figure 6** is a nano-CT tomograph image of the heated alloy structure with a voxel size of 35 nm, clearly showing that small porosities were removed but that the larger porosities remained and/or only shrank.

### Comparative Example 2

An additive manufactured alloy structure was prepared according to the method of Example 1. The chemical composition of the as-printed alloy structure was Al (89.7wt.% ± 0.7), Mg (7.4 wt.% ± 0.9), Zr (2.2 wt.% ± 0.2), Cu (0.02 wt.% ± 0.01), Fe (0.11 wt.% ± 0.01), Ga (0.01 wt.% ± 0.01), and Ti (0.01 wt.% ± 0.01). Additive manufacturing of the alloy structure was performed by using the following LPBF parameters a laser power P of 191 W, a scanning speed v of 300 mm/s, a hatching 140 space HS of 60 µm and a layer thickness t of 30 µm. Subsequently, the as-printed alloy structure was transferred to a furnace, operating at 540 °C, for 30 minutes. For the chemical composition above, the chosen temperature was above the melting point of a fraction or portion of the alloy structure. As a result, the voids or defects present in the as-printed alloy structure could be infiltrated by the liquid or molten portion or fraction and diffusion of said alloy structure. The reduction and/or removal of defects after heating the alloy structure is summarized in **Table 3**. From Table 3 it follows that the total defect volume could be reduced with about 23.90%, moreover the total number of voids could be reduced about 2-fold.

**Table 3: Analysis of voids before and after heating of the alloy structure.**

| Experiment | Total void volume (µm³) | Total number of voids |
|---|---|---|
| As-printed | 720 | 311 |
| Heat-treated | 548 | 179 |

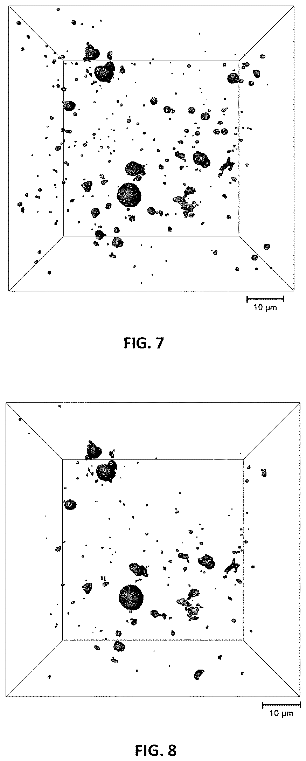

**Figure 7** is a nano-CT tomograph image of the as-printed alloy structure with a voxel size of 35 nm, clearly showing a high number of defects.

**Figure 8** is a nano-CT tomograph image of the heated alloy structure with a voxel size of 35 nm, clearly showing that the majority of the small porosities were removed but that the larger porosities remained and/or only shrank.

### Comparative Example 3

An additive manufactured alloy structure was prepared according to the method of Example 1. The chemical composition of the as-printed alloy structure was Al (89.7wt.% ± 0.7), Mg (7.4 wt.% ± 0.9), Zr (2.2 wt.% ± 0.2), Cu (0.02 wt.% ± 0.01), Fe (0.11 wt.% ± 0.01), Ga (0.01 wt.% ± 0.01), and Ti (0.01 wt.% ± 0.01). Additive manufacturing of the alloy structure was performed by using the following LPBF parameters a laser power P of 191 W, a scanning speed v of 300 mm/s, a hatching 140 space HS of 60 µm and a layer thickness t of 30 µm. Subsequently, the as-printed alloy structure was transferred to a furnace, operating at 540 °C, for 30 minutes. For the chemical composition above, the chosen temperature was above the melting point of a fraction or portion of the alloy structure. As a result, the voids or defects present in the as-printed alloy structure could be infiltrated by the liquid or molten portion or fraction of said alloy structure. After partial healing, the alloy structure was damaged by performing a uniaxial tensile test on a Zwick/Roell 50 kN machine as described in the methodology section above. Then, the damaged alloy structure was transferred to a furnace again, operating at 540 °C, for 30 minutes. The reduction and/or removal of defects after cyclical heating and damaging of the alloy structure is summarized in **Table 4.** From Table 4 it that the total defect volume could be reduced with about 6.50%, moreover the total number of voids could be reduced about 2-fold.

**Table 4: Analysis of voids before and after cyclical heating and damaging of the alloy structure.**

| Experiment | Total void volume (µm³) | Total number of voids |
|---|---|---|
| Damaged | 577 | 100 |
| Heat-treated | 540 | 61 |

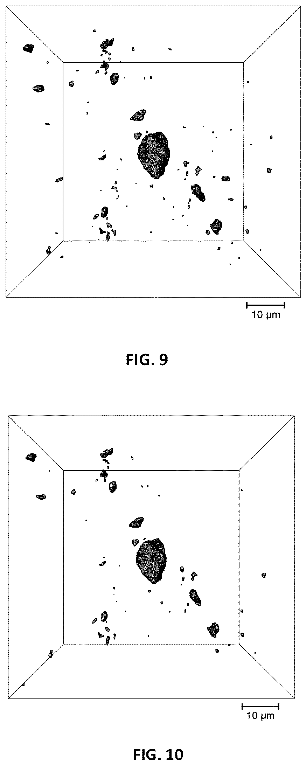

**Figure 9** is a nano-CT tomograph image of the damaged alloy structure with a voxel size of 35 nm, clearly showing a higher number of defects.

**Figure 10** is a nano-CT tomograph image of the heated alloy structure with a voxel size of 35 nm, clearly showing that the majority of the small porosities were removed but that the larger porosities remained and/or only shrank.

### Example 2

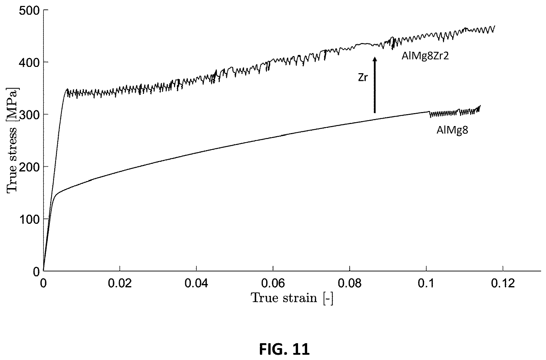

An additive manufactured alloy structure was prepared according to the method of Example 1. The chemical composition of the as-printed alloy structure was Al (89.7wt.% ± 0.7), Mg (7.4 wt.% ± 0.9), Zr (2.2 wt.% ± 0.2), Cu (0.02 wt.% ± 0.01), Fe (0.11 wt.% ± 0.01), Ga (0.01 wt.% ± 0.01), and Ti (0.01 wt.% ± 0.01). Subsequently, the as-printed alloy structure was heat-treated by using hot isostatic pressing (HIP) at a temperature of 540 °C for 30 minutes and an argon isostatic pressure of 300 MPa. The heat-treated alloy structure was then subjected to a uniaxial tensile test on a Zwick/Roell 50 kN machine as described in the methodology section above. The mechanical properties are summarized in **Figure 11** and compared to the mechanical properties of an aluminum alloy of the state of the art. From Figure 11, it follows that the heat-treated alloy structure has a yield stress of around 329 MPa ±15.

## Claims

1. A method for additive manufacturing of an alloy structure comprising the steps of:
a) preparing an additive manufacturing material from an alloy comprising zirconium (Zr), magnesium (Mg), and aluminum (Al);
b) additive manufacturing of an alloy structure using the additive manufacturing material; and,
c) subjecting the alloy structure to a heat-treatment at a temperature of at least 350 °C to at most 600 °C and a pressure of at least 10 MPa;
wherein the amount of zirconium (Zr) in the alloy is at least 0.5 wt.% and at most 5.0 wt.%; wherein the amount of magnesium (Mg) in the alloy is at least 6.0 wt.% and at most 20.0 wt.%; and wherein the amount of aluminum (Al) in the alloy is at least 75.0 wt.% and at most 93.5 wt.%; with wt.% based on the total weight of the alloy.

2. The method according to claim 1, wherein the amount of zirconium (Zr) in the alloy is at least 1.0 wt.% and at most 3.0 wt.%; wherein the amount of magnesium (Mg) in the alloy is at least 9.0 wt.% and at most 15.0 wt.%; and wherein the amount of aluminum (Al) in the alloy is at least 82.0 wt.% and at most 90.0 wt.%; with wt.% based on the total weight of the alloy.

3. The method according to claim 1 or 2, wherein the alloy structure is subjected to a heat-treatment for at least 1.0 minute to at most 6.0 hours.

4. The method according to any one of the preceding claims, wherein the heat-treatment comprises hot isostatic pressing of the alloy structure.

5. The method according to any one of the preceding claims, wherein the heat-treatment is at a temperature of at least 400 °C to at most 550 °C.

6. The method according to any one of the preceding claims, wherein the heat-treatment is at a pressure of least 10 MPa to at most 400 MPa.

7. The method according to any one of the preceding claims, wherein the additive manufacturing comprises Laser-Powder Bed Fusion, Electron Beam Powder Bed Fusion, Directed Energy Deposition, Friction Stir Deposition, or Friction Stir Additive Manufacturing; and preferably Laser-Powder Bed Fusion wherein the laser power is at least 100 W to at most 400 W and the scanning speed is at least 100 mm/s to at most 7000 mm/s.

8. The method according to any one of the preceding claims, wherein the heat treatment comprises partially melting the alloy structure, preferably such that only a portion of at least 10.0 wt.% to at most 30.0 wt.% of the alloy structure undergoes a transition from a solid state to a molten state, with wt.% based on the total weight of the alloy structure.

9. An alloy structure obtainable or obtained by means of the method as disclosed herein, **characterized in that** the alloy structure is substantially free of defects after being subjected to a heat-treatment of at least 350 °C to at most 600°C, and a pressure of at least 10 MPa.

10. The alloy structure according to claim 9, wherein the alloy structure exhibits, after heat-treatment, a total volume of defects reduced by at least 80%, or at least 90%, preferably at least 98%, compared to the initial total volume of defects before the heat treatment.

11. An alloy comprising zirconium (Zr), magnesium (Mg), and aluminum (Al); wherein a structure of the alloy has a yield strength of at least 300 MPa, and said structure is configured such that after being subjected to a heat treatment of at least 350 °C to at most 600°C and a pressure of at least 10 MPa it is substantially free of defects; and wherein the amount of zirconium (Zr) in the alloy is at least 0.5 wt.% and at most 5.0 wt.%; wherein the amount of magnesium (Mg) in the alloy is at least 6.0 wt.% and at most 20.0 wt.%; and wherein the amount of aluminum (Al) in the alloy is at least 75.0 wt.% and at most 93.5 wt.%; with wt.% based on the total weight of the alloy.

12. The alloy according to claim 11, wherein the alloy further comprises copper (Cu), iron (Fe), gallium (Ga), and titanium (Ti); and optionally zinc (Zn), scandium (Sc), boron (B), silicon (Si), and/or manganese (Mn).

13. The alloy according to claims 11 or 12, wherein the combined amount of copper (Cu), iron (Fe), gallium (Ga), and titanium (Ti); and optionally zinc (Zn), scandium (Sc), boron (B), silicon (Si), and/or manganese (Mn) may be at most 5.0 wt.%, preferably 3.0 wt.%; with wt.% based on the total weight of the alloy.

14. The alloy according to any one of claims 11 to 13, wherein the weight ratio of zirconium (Zr) to magnesium (Mg) may range from 1:1 to 1:13.5.

15. An additive manufacturing material comprising an alloy comprising zirconium (Zr), magnesium (Mg), and aluminum (Al); and wherein a structure of the additive manufacturing material has a yield strength of at least 300 MPa, and said structure is configured such that after being subjected to a heat treatment of at least 350 °C to at most 600°C and a pressure of at least 10 MPa it is substantially free of defects; and wherein the amount of zirconium (Zr) in the powder is at least 0.5 wt.% and at most 5.0 wt.%; wherein the amount of magnesium (Mg) in the powder is at least 6.0 wt.% and at most 20.0 wt.%; and wherein the amount of aluminum (Al) in the powder is at least 75.0 wt.% and at most 93.5 wt.%; with wt.% based on the total weight of the powder.
